# EUROPEAN PATENT APPLICATION

(11) **EP 4 451 102 A1**
(43) Date of publication of application: **23.10.2024**
(21) Application number: 23315082.0
(22) Date of filing: 18.04.2023
(51) Int. Cl.: G06F 3/0482, G06F 3/04842, G06F 3/04886, F24C 7/08

(54) **METHOD OF DISPLAYING WIDGETS ON A SCREEN OF AN OVEN AND CORRESPONDING OVEN**

(71) Applicant: Illinois Tool Works Inc., Glenview IL 60025 (US)
(72) Inventor: Gavignet, Thibaut, Glenview, IL 60025 (US); Lubrina, Yves, Glenview, IL 60025 (US)
(74) Representative: HGF

(57) **Abstract**

The invention relates to a multifunctional oven and associated method. The oven includes a data display device for manipulation by an operator and the data is displayed in the form of widgets (2) on a screen (1) of the multifunctional oven with a main display mode (M). The multifunctional oven includes first means for selecting, from the main display mode (M), a secondary display mode (S) comprising one or more of the displayable widgets (2) or at least one or more of the selectable widgets for display on the screen (1) in the main display mode (M). The multifunctional oven also includes second means for selecting, from the secondary display mode (S), at least one widget (2) for display on the main display mode (M), and means for displaying said at least one selected widget (2) on the screen in the main display mode (M).

## Description

This invention relates generally to an oven, and more particularly to a multifunctional oven. More specifically, although not exclusively, this invention relates to a multifunctional oven having a display. More particularly, this invention relates to a display method for a multifunctional oven and a multifunctional oven comprising a data display device.

Modern cooking appliances often have a plurality of selectable operational modes or functions. These may be activated using dials/knobs or via a display provided on the appliance. A number of these selectable functions provide specific cooking modes that are rarely used, or are only used when cooking particular foodstuffs. Additionally, in some cases there is self-cleaning functionality and/or recipe storage. Further, in industrial cooking settings, some users may regularly use particular functions that others rarely or never use depending on their job role or expertise.

The Applicants have observed a need to provide customisation of a multifunctional cooking appliance and, in particular, the selection of operational modes or functions that are available to a particular user. Such customisation would allow particular users to only have the operational modes or functions that they desire presented to them.

It is therefore a first non-exclusive object of the invention to provide a multifunctional oven and a display method thereof that provides improved user customisation.

According to an aspect of the invention, there is provided a method of displaying data for the manipulation of a multifunctional oven by an operator, said data being displayed in the form of widgets on a screen of the multifunctional oven with a main display mode; wherein the method comprises: from the main display mode, selecting a secondary display mode comprising one or more of the displayable widgets and/or one or more of the selectable widgets for display on the screen in the main display mode; from the secondary display mode, selecting at least one widget for display on the main display mode; and displaying said at least one selected widget on the screen in the main display mode.

In some examples, a or each widget may have an associated or corresponding function of the multifunctional oven. The main display mode may display the function(s) available to an operator of the multifunctional oven.

A or each widget may comprise a selectable icon or application having an associated or corresponding function of the multifunction oven

The secondary display mode may comprise all, most and/or substantially all of the displayable widgets. The secondary display mode may comprise at least all, most and/or substantially all of the selectable widgets for display in the screen in the main display mode. The secondary display mode may comprise substantially all of the selectable functions provided by the multifunction oven.

The multifunction oven may comprise a widget for selecting the secondary display mode. The widget for selecting the secondary display mode may be or comprise a customisation key or customisation widget. The customisation key or customisation widget may always be present in the main display mode.

The screen may be a touch screen.

Each or most of the widgets may be grouped with one or more widgets in a defined group or category. Substantially all of the widgets may be grouped with one or more widgets in a defined group or category. One or more of the widgets may be grouped with one or more widgets in a defined group or category.

Additionally or alternatively, each, most and/or substantially all of the widgets may be weighted according to a defined weighting.

During the step of displaying the selected widget(s) on the screen in the main display mode, the selected widget(s) which is/are also grouped and/or weighted, may be positioned on the screen in the main display mode according to its/their group and/or weighting. The selected widget(s) which is/are grouped and/or weighted may be positioned on the screen in the main display mode in one or more zones or areas according to its/their group and/or weighting. Each zone or area may have a predetermined number of lines in the main display mode. The main display mode may comprise one or more zones or areas corresponding to defined groups or common theme types of widgets.

The method may comprise, after the step of selecting said at least one widget to be displayed, a step of calculating the positioning of the selected widget(s), which is/are also grouped and/or weighted, according to their grouping and/or weighting.

The weighting may comprise at least two priority levels. A widget weighted at a higher priority level may be displayed on a main display line of the main display mode. A widget weighted at a lower priority level may be displayed on a sub-display line, secondary display line or secondary line of the main display mode. The sub-display line, secondary display line or secondary line may be located below the main display line, e.g. in use. The weighting or priority level may be predetermined or pre-programmed, e.g. in dependence on the likely frequency of use or selection of a widget.

Each group or category of widgets may be associated with or assigned a maximum number of widgets. If the number of widgets from a group or category selected in the secondary display mode exceeds the maximum number of widgets a visible and/or audible alarm or notification is provided.

A function of the multifunctional oven may be performed by applying at least one touch to a widget in the main display mode.

Each, most and/or substantially all of the widgets may be grouped with one or more widgets in a defined group, e.g. according to a common theme type. One or more of the widgets may be grouped with one or more widgets in a defined group, e.g. according to a common theme type. The defined groups and/or common theme type may comprise two or more selected from the following themes: cooking, recipes, washing and/or settings

The widgets may be grouped based on theme type, wherein widgets grouped based on each respective theme type have a common associated function of the multifunction oven.

The widgets may be selected from widgets having the following functions: cook/oven activation, multiple timer setting, a temperature differential setting, preheat, stored recipes, create recipe, recipe history, oven clean setting.

The method may further comprise an authentication procedure. The authentication procedure may comprise an authentication step authorising at least one previously registered operator or user to access the secondary display mode. The authentication step may comprise the request or input of an authentication pin or code in order to access the secondary display mode.

The authentication procedure may comprise one or more different levels of authentication of the multifunctional oven. A previously registered operator or user may be assigned a level of authentication. The level of authentication may be assigned automatically in dependence on the job role of the operator or user.

The functionality available to an operator or user of the multifunctional oven may be dependent on the level of authentication. The widgets available in the main display mode and/or secondary display mode to an operator or user of the multifunctional oven may be dependent on the level of authentication. An operator or user with a higher level of authentication may be able to access more functions and/or have more displayed widgets in the main display mode and/or secondary display mode than an operator or user with a lower level of authentication.

The method may comprise selecting a stored used profile. The user profile may comprise a stored main display mode. A stored user profile may be accessed via an authentication step. The stored main display mode may be predetermined based on the level of authentication.

In the secondary display mode at least one widget may displayed with a similar, corresponding or identical visual, icon or indicia to that of said widget in the main display mode. In the secondary display mode at least one widget may be displayed with a similar, corresponding or identical position to that of said widget in the main display mode.

When all selectable widgets are selected, e.g. in the secondary display mode, the positioning of the widgets in the main display mode may be identical to the positioning of the widgets in the secondary display mode, e.g. to within one homothety.

in the secondary display mode, a selection of a widget to be selected may be performed by applying at least one touch or press to the widget to be selected.

In the secondary display mode each widget may be displayed in at least a first display state indicating that the widget is selected and a second display state indicating that the widget is not selected or is deselected. A selected widget may be presented in the main display mode. A deselected widget may not be presented in the main display mode.

The method may comprise resizing one or more widget(s) in the main display mode when a widget is not selected or is deselected in the secondary display mode.

The customisation key may not be deselected.

Each widget may be displayed brighter in the first display state than the second display state.

The method may comprise a step of resizing at least one dimension of at least one widget to be displayed in the main display mode according to at least one resizing rule

In the main display mode the screen may be divided into at least two main display areas, each widget being assigned or allocated to a main display area.

in the secondary display mode the screen may be divided into at least two secondary display areas. Each widget may be allocated to a secondary display area. The number of main display areas may be identical to the number of secondary display areas. For at least one widget the main display area and the secondary display area allocated to it may be positioned identically in their respective display mode, e.g. to within one homothety.

At least one first main display area may be associated with at least one first resizing rule and/or at least one second main display area may be associated with at least one second resizing rule. The first resizing rule may be different from the second resizing rule.
The method may comprise accessing the main display mode and/or secondary display mode via one or more further display device(s) remote from the multifunctional oven. The one or more further display device(s) may be synchronised.

The method may comprise: from one or more further display device(s) accessing the main display mode, selecting a secondary display mode comprising one or more of the displayable widgets and/or one or more of the selectable widgets for display on the screen in the main display mode of the multifunctional oven; from the secondary display mode, selecting at least one widget for display on the main display mode of the multifunctional oven; and displaying said at least one selected widget on the screen in the main display mode of the multifunctional oven.

The method may comprise projecting or duplicating the screen of the multifunctional oven onto the display of one or more further display device(s).

The method may comprise accessing one or more widgets of the main display mode and/or secondary display mode of the multifunctional oven via one or more further display device(s).

The method may comprise accessing the display device of the multifunctional oven via an application, e.g. provided on an external or remote electronic device.

The method may comprise amending a stored used profile or user profile data via the one or more further display device(s) and/or external or remote electronic device. The method may comprise amending a stored used profile or user profile data via the one or more further display device(s) and/or external or remote electronic device. The method may comprise amending one or more widgets of the main display mode and/or secondary display mode via the one or more further display device(s) and/or external or remote electronic device.

According to another aspect of the invention, there is provided a multifunctional oven comprising a data display device for manipulation by an operator, said data being displayed in the form of widgets on a screen of the multifunctional oven with a main display mode, wherein the multifunctional oven comprises: first means for selecting, from the main display mode, a secondary display mode comprising one or more of the displayable widgets or at least one or more of the selectable widgets for display on the screen in main display mode; second means for selecting, from the secondary display mode, at least one widget for display on the main display mode; and means for displaying said at least one selected widget on the screen in the main display mode.

The secondary display mode may comprise all, most and/or substantially all of the displayable widgets. The secondary display mode may comprise at least all, most and/or substantially all of the selectable widgets for display in the screen in the main display mode.

The secondary display mode may comprise substantially all of the selectable functions provided by the multifunctional oven.

The multifunctional oven may comprise a widget for selecting the secondary display mode.

The widget for selecting the secondary display mode may be or comprise a customisation key or customisation widget. The customisation key or customisation widget may always be present in the main display mode.

A widget may comprise a selectable icon or application having an associated function of the multifunctional oven.

The screen may be a touch screen.

Each or most of the widgets may be grouped with one or more widgets in a defined group or category. Substantially all of the widgets may be grouped with one or more widgets in a defined group or category. One or more of the widgets may be grouped with one or more widgets in a defined group or category.

Each, most and/or substantially all of the widgets may be grouped with one or more widgets in a defined group, e.g. according to a common theme type. One or more of the widgets may be grouped with one or more widgets in a defined group, e.g. according to a common theme type. The common theme type may comprise two or more selected from the following themes: cooking, recipes, washing and/or settings.

Additionally or alternatively, each, most and/or substantially all of the widgets may be weighted according to a defined weighting.

When displaying the selected widget(s) on the screen in the main display mode, the selected widget(s) which is/are also grouped and/or weighted, may be positioned on the screen in the main display mode according to its/their group and/or weighting. The selected widget(s) which is/are grouped and/or weighted may be positioned on the screen in the main display mode in one or more zones or areas according to its/their group and/or weighting. Each zone or area may have a predetermined number of lines in the main display mode. The main display mode may comprise one or more zones or areas corresponding to defined groups or common theme types of widgets.

The multifunctional oven may comprise a means for calculating the positioning of the selected widget(s), which is/are also grouped and/or weighted, according to their grouping and/or weighting.

The weighting may comprise at least two priority levels. The main display mode may comprise a main display line. A widget weighted at a higher priority level may be displayed on a main display line of the main display mode. The main display mode may comprise a sub-display line, secondary display line or secondary line. A widget weighted at a lower priority level may be displayed on a sub-display line, secondary display line or secondary line of the main display mode. The sub-display line, secondary display line or secondary line may be located below the main display line, e.g. in use. The weighting or priority level may be predetermined or pre-programmed, e.g. in dependence on the likely frequency of use or selection of a widget.

Each group or category of widgets may be associated with or assigned a maximum number of widgets. If the number of widgets from a group or category selected in the secondary display mode exceeds the maximum number of widgets the oven may be configured to provide a visible and/or audible alarm or notification.

The multifunctional oven may comprise one or more of the following functions: cook/oven activation, multiple timer setting, a temperature differential setting, preheat, stored recipes, create recipe, recipe history, oven clean setting. Each function may have an associated or corresponding widget.

The widgets may be selected from widgets having the following functions: cook/oven activation, multiple timer setting, a temperature differential setting, preheat, stored recipes, create recipe, recipe history, oven clean setting.

The multifunctional oven may comprise or require an authentication procedure. The authentication procedure may comprise an authentication step authorising at least one previously registered operator or user to access the secondary display mode. The authentication step may comprise the request or input of an authentication pin or code in order to access the secondary display mode.

The authentication procedure may comprise one or more different levels of authentication of the multifunctional oven. A previously registered operator or user may be assigned a level of authentication. The level of authentication may be assigned automatically in dependence on the job role of the operator or user.

The functionality available to an operator or user of the multifunctional oven may be dependent on the level of authentication. The widgets available in the main display mode and/or secondary display mode to an operator or user of the multifunctional oven may be dependent on the level of authentication. An operator or user with a higher level of authentication may be able to access more functions and/or have more displayed widgets in the main display mode and/or secondary display mode than an operator or user with a lower level of authentication.

The multifunctional oven may comprise one or more stored used profiles. The user profile(s) may comprise a stored main display mode. A stored user profile may be accessed via an authentication step. The stored main display mode may be predetermined based on the level of authentication.

In the secondary display mode at least one widget may displayed with a similar, corresponding or identical visual, icon or indicia, to that of said widget in the main display mode. In the secondary display mode at least one widget may be displayed with a similar, corresponding or identical position to that of said widget in the main display.

When all selectable widgets are selected, e.g. in the secondary display mode, the positioning of the widgets in the main display mode may be identical to the positioning of the widgets in the secondary display mode, e.g. to within one homothety.

In the secondary display mode, a selection of a widget to be selected may be performed by applying at least one touch or press to the widget to be selected.

In the secondary display mode each widget may comprise or be displayed in at least a first display state indicating that the widget is selected and a second display state indicating that the widget is not selected or is deselected. A selected widget may be presented in the main display mode. A deselected widget may not be presented in the main display mode.

The customisation key may not be deselected.

Each widget may be displayed brighter in the first display state than the second display state.

The data display device or multifunctional oven may be arranged to resize at least one dimension of at least one widget to be displayed in the main display mode according to at least one resizing rule.

In the main display mode the screen may be divided into at least two main display areas. Each widget may be assigned or allocated to a main display area.

In the secondary display mode the screen may be divided into at least two secondary display areas. Each widget may be allocated to a secondary display area. The number of main display areas may be identical to the number of secondary display areas. For at least one widget the main display area and the secondary display area allocated to it may be positioned identically in their respective display mode, e.g. to within one homothety.

At least one first main display area may be associated with at least one first resizing rule and/or at least one second main display area may be associated with at least one second resizing rule. The first resizing rule may be different from the second resizing rule.

The main display mode and/or secondary display mode may be accessed via one or more further display device(s) remote from the multifunctional oven. The one or more further display device(s) may be synchronised.

One or more further display device(s) may be provided each comprising a data display device for manipulation by an operator. Wherein the one or more further display device(s) oven comprise: first means for selecting, from the main display mode, a secondary display mode comprising one or more of the displayable widgets or at least one or more of the selectable widgets for display on the screen in main display mode of the multifunctional oven; second means for selecting, from the secondary display mode, at least one widget for display on the main display mode of the multifunctional oven; and means for displaying said at least one selected widget on the screen in the main display mode of the multifunctional oven.

The screen of the multifunctional oven may be projected or duplicated onto the display of one or more further display device(s).

The one or more further display device(s) may allow access to one or more widgets of the main display mode and/or secondary display mode of the multifunctional oven.
The display device of the multifunctional oven may be accessed via an application, e.g. provided on an external or remote electronic device.

A stored used profile or user profile data may be amended via the one or more further display device(s) and/or external or remote electronic device. A stored used profile or user profile data may be amended via the one or more further display device(s) and/or external or remote electronic device. One or more widgets of the main display mode and/or secondary display mode may be amended via the one or more further display device(s) and/or external or remote electronic device.

For the avoidance of doubt, any of the features described herein apply equally to any aspect of the invention. For example, the oven may comprise any one or more features of the method relevant to the oven and/or the method may comprise any one or more features or steps relevant to one or more features of the oven.

A further aspect of the invention provides a computer program element comprising computer readable program code means for causing a processor to execute a procedure to implement one or more steps of the aforementioned method.

A yet further aspect of the invention provides the computer program element embodied on a computer readable medium.

A yet further aspect of the invention provides a computer readable medium having a program stored thereon, where the program is arranged to make a computer execute a procedure to implement one or more steps of the aforementioned method.

A yet further aspect of the invention provides a control means or control system or controller comprising the aforementioned computer program element or computer readable medium.

For purposes of this disclosure, and notwithstanding the above, it is to be understood that any controller(s), control units and/or control modules described herein may each comprise a control unit or computational device having one or more electronic processors. The controller may comprise a single control unit or electronic controller or alternatively different functions of the control of the system or apparatus may be embodied in, or hosted in, different control units or controllers or control modules. As used herein, the terms "control unit" and "controller" will be understood to include both a single control unit or controller and a plurality of control units or controllers collectively operating to provide the required control functionality. A set of instructions could be provided which, when executed, cause said controller(s) or control unit(s) or control module(s) to implement the control techniques described herein (including the method(s) described herein). The set of instructions may be embedded in one or more electronic processors, or alternatively, may be provided as software to be executed by one or more electronic processor(s). For example, a first controller may be implemented in software run on one or more electronic processors, and one or more other controllers may also be implemented in software run on or more electronic processors, optionally the same one or more processors as the first controller. It will be appreciated, however, that other arrangements are also useful, and therefore, the present invention is not intended to be limited to any particular arrangement. In any event, the set of instructions described herein may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
Figure 1 shows a screen of an oven in a main display mode;
Figure 2 shows a screen of an oven in a secondary display mode with widgets selected;
Figure 3 shows a screen of the oven of Figure 2 in a main display mode with the selected widgets;
Figure 4a shows the priority levels of the 'Cooking' zone of Figure 1;
Figure 4b shows the priority levels of the 'Recipes' zone of Figure 1;
Figure 4c shows the priority levels of the 'Washing' zone of Figure 1;
Figure 4d shows the priority levels of the 'Settings' zone of Figure 1; and
Figure 5 is a screen of an oven showing an authorisation screen.

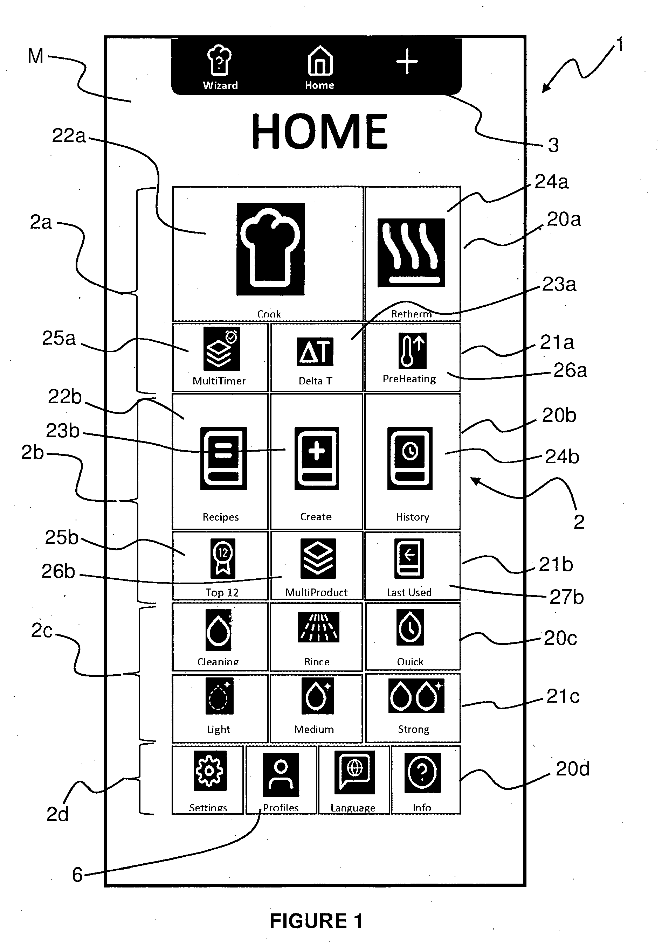

Referring now to Figure 1, there is shown a screen 1 of an oven in a main display mode M. The oven is a multifunctional oven in this example. The screen 1 is a touch screen in this example and displays a plurality of widgets 2. Each widget 2 provides selectable icon or application having an associated function of the oven. In the present example, all selectable widgets 2 are displayed in the main display mode M.

The widgets 2 are arranged into four different groups presented in respective zones 2a, 2b, 2c and 2d in main display mode M. Each of the zones 2a, 2b, 2c and 2d has an associated theme type to which the widgets 2 are allocated. In the present example, the theme types are cooking 2a, recipes 2b, washing 2c and settings 2d, and the widgets 2 allocated to each theme type have a function related to that theme type. Each zone 2a, 2b, 2c, 2d is assigned a maximum number of widgets 2. Each of zones 2a, 2b and 2c are displayed over two display lines; a respective main display line 20a, 20b, 20c and respective secondary display line 21a, 21b, 21c. Zone 2d is displayed over a single display line 20d in the present example.

Further, the widgets 2 within each zone 2a, 2b, 2c, 2d are positioned in the main display mode in dependence on their weighting. In the present example, the weighting for each widget is pre-programmed and determines the size of the widget and its position within the zone 2a, 2b, 2c, 2d.

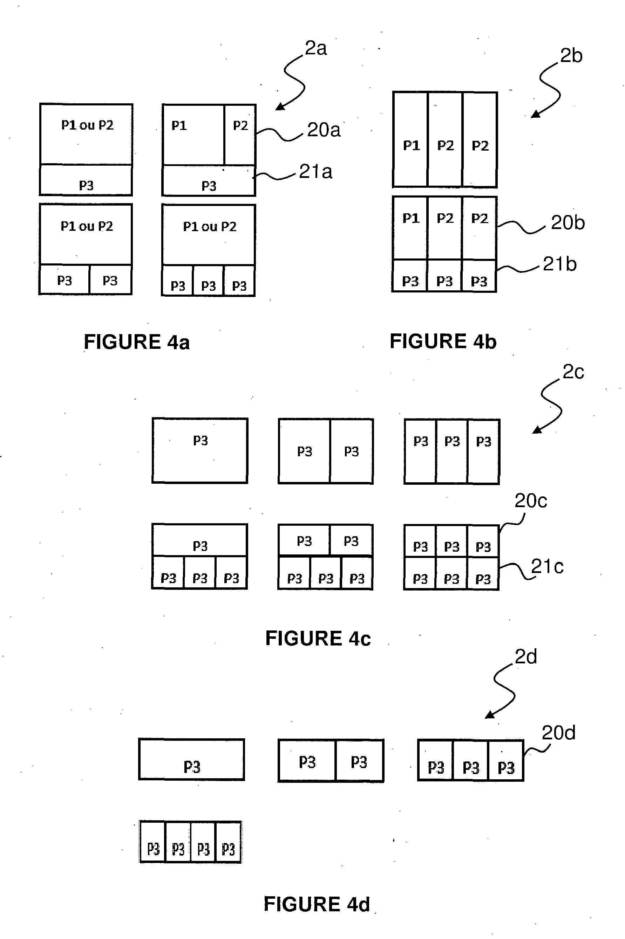

The weighting includes three priority levels P1, P2, P3, described in greater detail in relation to Figures 4a to 4d below. A widget 2 weighted at a higher priority level is displayed on the main display line 20a, 20b, 20c of the main display mode. A widget 2 weighted at a lower priority level is displayed on the secondary display line 21a, 21b, 21c of the main display mode. The secondary display line 21a, 21b, 21c is located below the main display line 20a, 20b, 20c in the present example. For example, within cooking zone 2a the 'Cook' widget 22a is of a higher priority level than the 'Delta T' widget 23a. The 'Cook' widget 22a is therefore provided on the main display line 20a whilst the 'Delta T' widget 23a is provided on the secondary display line 21a. Further, the 'Cook' widget 22a is displayed larger than the 'Delta T' widget 23a.

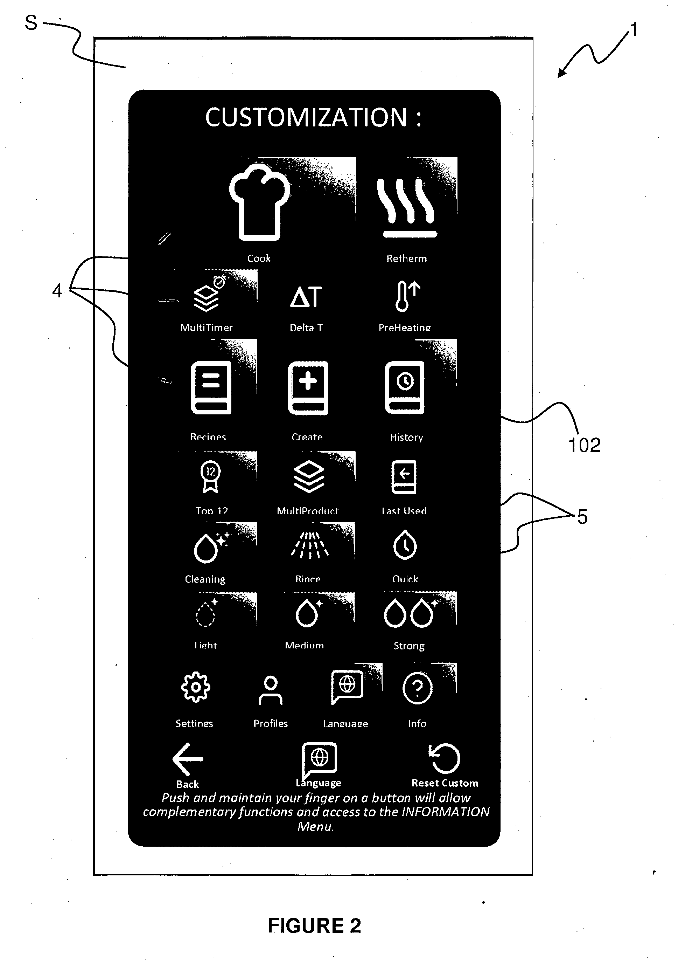

The position and size of the widgets 2 within each zone 2a, 2b, 2c and 2d is also dependent on which widgets 2 from each respective group are selected in the secondary display mode S (Figure 2), described in greater detail in relation to Figures 4a to 4d below.

Proximate the top of the display 1 in the main display mode M, spaced from the zones 2a, 2b, 2c, 2d are three further widgets. One of these is a customisation key 3 which is operable to select a secondary display mode, described below.

Referring now to Figure 2, there is shown a screen 1 of an oven in a secondary display mode S. The secondary display mode S is presented when the customisation key 3 is selected and displays a plurality of widgets 102 representing all of the selectable or displayable functions provided by the oven. In the present example, the secondary display mode S displays all of the widgets 102 displayable in the main display mode M.

When all widgets 102 are selected in the secondary display mode S the widgets 102 are displayed with an identical visual icon or indicia to that of the widgets 2 in the main display mode M. Further, when all widgets 102 are selected in the secondary display mode S the widgets 102 are displayed in an identical position and size to that of the widgets 2 in the main display mode M. In the secondary display mode S, a selection of a widget 102 to be selected is performed by applying a touch or press to the widget 102 to be selected.

In the secondary display mode S each widget 102 is either displayed in at first display state 4 indicating that the widget 102 is selected and a second display state 5 indicating that the widget 102 is not selected or is deselected. A selected widget is presented in the main display mode M whilst a deselected widget is not presented in the main display mode M. In the first display state 4 the widget 102 is displayed brighter than in the second display state 5. In the present example, Figure 2 shows a number of widgets 102 being displayed in the first display state 4 indicating that they are selected.

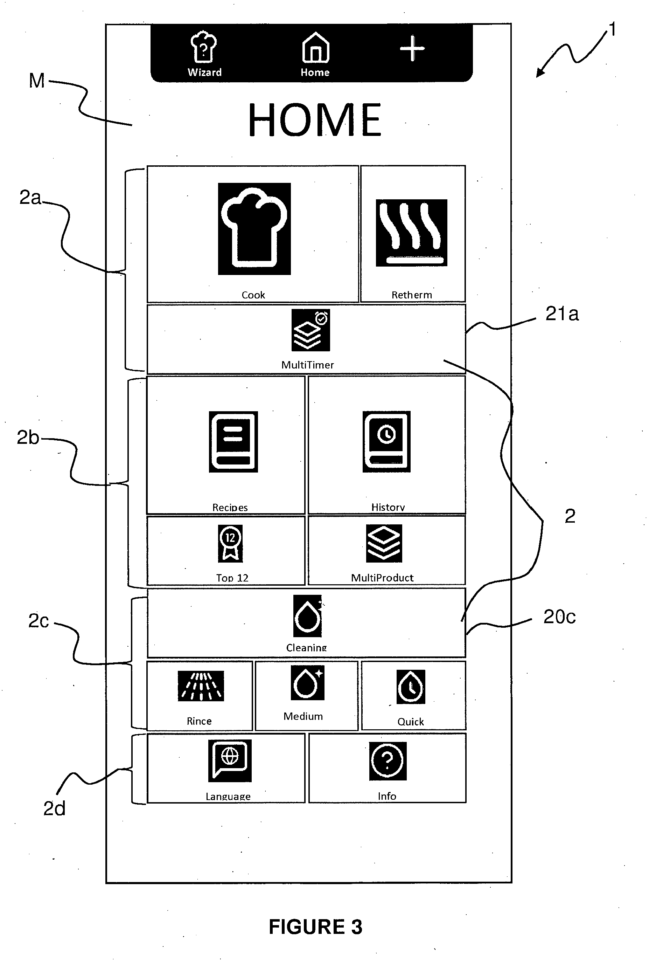

Referring to Figure 3, the user of the oven can return to the main display mode M where the displayed widgets 2 correspond to those selected in the secondary display mode S of Figure 3. The widgets 2 are resized within their respective zone 2a, 2b, 2c, 2d depending on the particular widgets 102 selected in the secondary display mode S.

For example, in comparison with the main display mode M of Figure 1, or the secondary display mode of Figure 2, secondary display line 21a and main display line 20c each have a single widget 2 rather than three. In these cases, the widgets 2 maintain their position on the secondary display line, but are resized.

Rules for positioning and sizing of widgets within each of the zones 2a, 2b, 2c and 2d are detailed below in relation to Figures 4a to 4d.

Where all widgets 102 are selected in the secondary display mode S, no resizing takes place. However, where a lesser number of widgets 102 are selected for display in the main display mode M than are displayed in the secondary display mode S, resizing of the widgets 102 takes place. Widgets 102 that are presented in the main display line 20a, 20b, 20c in the secondary display mode S maintain their position in the main display line 20a, 20b, 20c in the main display mode M. Likewise, widgets 102 that are presented in the secondary display line 21a, 21b, 21c in the secondary display mode S maintain their position in the secondary display line 21a, 21b, 21c in the main display mode M.

Referring now to Figure 4a, there is shown rules for weighting and positioning of widgets allocated to the 'Cooking' zone 2a. In the present example, the widgets 2 have three priority levels P1, P2, P3. With reference to Figure 1, in the present example 'Cook' widget 22a is of the highest priority level P1, the 'Reheat' widget 24a is of the second priority level P2 and each of the 'Delta T' widget 23a, 'Multi Timer' widget 25a and `Pre Heating' widget 26a are of the third priority level P3.

In the present arrangement, the widgets allocated the first and second priority levels are always presented on the main display line 20a, whilst the widgets allocated the third priority level are always presented on the secondary display line 21a. The resizing of the widgets 2 is also shown depending on how many widgets are selected, with the widget of priority level P1 being presented larger than the widget of priority level P2 when both are selected.

Referring now to Figure 4b, there is shown rules for weighting and position of widgets allocated to the 'Recipes' zone 2b. As described above, the widgets 2 have three priority levels P1, P2, P3. With reference to Figure 1, in the present example 'Recipes' widget 22b is of the highest priority level P1, the 'Create' widget 23b and 'History' widget 24b are of the second priority level P2 and each of the 'Top 12' widget 25b, 'Multi Product' widget 26b and 'Last Used' widget 27b are of the third priority level P3.

in the present arrangement, the widgets allocated the first and second priority levels are always presented on the main display line 20b, whilst the widgets allocated the third priority level are always presented on the secondary display line 21b. The resizing of the widgets 2 is also shown depending on how many widgets are selected, with the widget of priority level P1 being presented larger than the widget of priority level P2 when both are selected.

It is also shown that the widgets of priority levels P1 and P2 extend the entire height of the zone 2b when there are no widgets of priority level P3 selected.

Referring now to Figure 4c, there is shown rules for weighting and position of widgets allocated to the 'Washing' zone 2c. Within this zone, all selectable widgets are of the lowest priority level P3 and the selected widgets are distributed within the zone 2c between the main display. line 20c and secondary display line 21c.

Referring now to Figure 4d, there is shown rules for weighting and position of widgets allocated to the 'Settings' zone 2d. Similar to zone 2c, all selectable widgets 2 are of the lowest priority level P3. Further, zone 2d only has a single line 20d. Selected widgets are distributed within the zone 2d along line 20d and their respective sizes are equal.

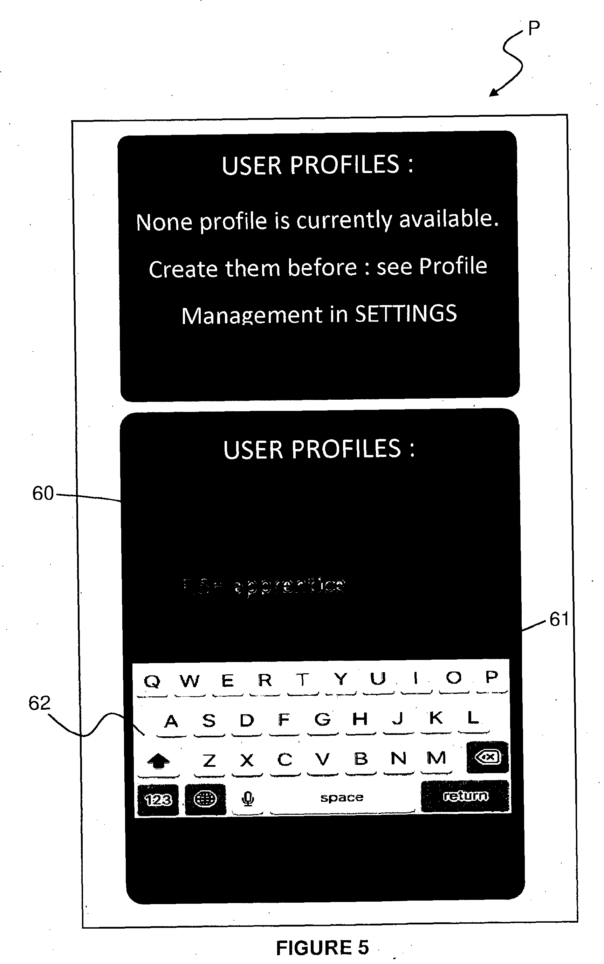

Referring now to Figure 5, there is shown a user profile login page P accessed via the 'Profiles' widget 6 as shown in Figures 1 and 2. The oven stores a plurality of user profiles that are provided in a list 60 on the user profile login page P. in order to access a selected profile, an authentication step in the form of pin code entry 61 is required via input keyboard 62.

Each user profile includes a stored main display mode M in which only desired widgets 2 are presented.

It will be appreciated by those skilled in the art that several variations to the aforementioned embodiments are envisaged without departing from the scope of the invention.

It will also be appreciated by those skilled in the art that any number of combinations of the aforementioned features and/or those shown in the appended drawings provide clear advantages over the prior art and are therefore within the scope of the invention described herein.

## Claims

1. A method of displaying data for the manipulation of a multifunctional oven by an operator, said data being displayed in the form of widgets on a screen of the multifunctional oven with a main display mode;
wherein the method comprises:
from the main display mode, selecting a secondary display mode comprising one or
more of the displayable widgets or at least one or more of the selectable widgets for display on the screen in the main display mode;
from the secondary display mode, selecting at least one widget for display on the main display mode; and
displaying said at least one selected widget on the screen in the main display mode.

2. A display method according to claim 1, wherein each widget comprises a selectable icon having an associated function of the multifunctional oven and the main display mode displays the function(s) available to an operator of the multifunctional oven.

3. A display method according to claim 2, **characterised in that** substantially all of the widgets is/are :
grouped with one or more widgets in a defined group; and/or weighted according to a defined weighting;
and **in that** during the step of displaying the selected widget(s) on the screen in the main display mode, the selected widget(s) which is/are also grouped and/or
weighted, is/are positioned on the screen in the main display mode according to its/their group and/or weighting.

4. A display method according to claim 3, wherein the method comprises, after the step of selecting said at least one widget to be displayed, a step of calculating the positioning of the selected widget(s), which is/are also grouped and/or weighted, according to their grouping and/or weighting.

5. A display method according to claim 4, wherein the weighting comprises at least two priority levels (P1, P2, P3), a widget weighted at a higher priority level (P1, P2) being displayed on a main display line of the main display mode and a widget weighted at a lower priority level (P3) being displayed on a secondary display line of the main display mode, the secondary display line being located below the main display line.

6. A display method according to any one of claims 3 to 5, wherein each group of widgets is associated with a maximum number of widgets.

7. A display method according to any one of claims 2 to 6, wherein a function of the multifunctional oven is performed by applying at least one touch to a widget in the main display mode.

8. A display method according to any one of claims 3 to 7, wherein widgets are grouped based on common theme type, wherein widgets grouped based on each respective common theme type have a common associated function of the multifunction oven.

9. A display method according to claim 8, wherein the defined groups include two or more of cooking, recipes, washing and/or settings.

10. A display method according to any of the preceding claims, **characterised in that** it further comprises an authentication step authorising at least one previously registered operator to access the secondary display mode.

11. A display method according to any of the preceding claims, **characterised in that** in the secondary display mode at least one widget is displayed with a similar or identical visual to that of said widget in the main display mode.

12. A display method according to any of the preceding claims, **characterised in that** when all selectable widgets are selected, the positioning of the widgets in the main display mode is identical to the positioning of the widgets in the secondary display mode to within one homothety.

13. A display method according to any of the preceding claims, **characterised in that** in the secondary display mode, a selection of a widget to be selected is performed by applying at least one touch to the widget to be selected.

14. A display method according to any of the preceding claims, **characterised in that** in the secondary display mode each widget is displayed in at least a first display state indicating that the widget is selected and a second display state indicating that the widget is not selected.

15. A display method according to any of the preceding claims, further comprising a step of resizing at least one dimension of at least one widget to be displayed in the main display mode according to at least one resizing rule

16. A display method according to any of the preceding claims, wherein in the main display mode the screen is divided into at least two main display areas, each widget being assigned to a main display area.

17. A display method according to claim 16, wherein in the secondary display mode the screen is divided into at least two secondary display areas, each widget being allocated to a secondary display area, the number of main display areas being . identical to the number of secondary display areas, and in that for at least one widget the main display area and the secondary display area allocated to it are positioned identically in their respective display mode to within one homothety.

18. A display method according to claim 16 when dependent on claim 15, wherein at least one first main display area is associated with at least one first resizing rule and at least one second main display area is associated with at least one second resizing rule, said first resizing rule being different from the second resizing rule.

19. A multifunctional oven comprising a data display device for manipulation by an operator, said data being displayed in the form of widgets on a screen of the multifunctional oven with a main display mode, wherein the multifunctional oven comprises :
first means for selecting, from the main display mode, a secondary display mode comprising one or more of the displayable widgets or at least one or more of the selectable widgets for display on the screen in main display mode second means for selecting, from the secondary display mode, at least one widget for display on the main display mode; and
means for displaying said at least one selected widget on the screen in the main display mode.
